# EUROPEAN PATENT SPECIFICATION

(11) **EP 4 198 519 B1**
(45) Date of publication and mention of the grant of the patent: **27.08.2025**
(21) Application number: 21214668.2
(22) Date of filing: 15.12.2021
(51) Int. Cl.: G01N 35/04

(54) **LABORATORY SAMPLE CONTAINER CARRIER HANDLING APPARATUS, LABORATORY AUTOMATION SYSTEM, AND USE**
HANDHABUNGSVORRICHTUNG FÜR LABORPROBENBEHÄLTERTRÄGER, LABORAUTOMATISIERUNGSSYSTEM UND VERWENDUNG
APPAREIL DE MANIPULATION DE SUPPORT DE RÉCIPIENT D'ÉCHANTILLONS DE LABORATOIRE, SYSTÈME D'AUTOMATISATION DE LABORATOIRE ET UTILISATION

(43) Date of publication of application: 21.06.2023
(73) Proprietor: Roche Diagnostics GmbH, 68305 Mannheim (DE); F. Hoffmann-La Roche AG, 4070 Basel (CH)
(72) Inventor: Addihalli Narayana, Avinash, 70597 Stuttgart (DE); Rehmann, Yöran, 4053 Basel (CH); Huber, Tobias, 71522 Backnang (DE); Schenk, Lotar, 8934 Knonau (CH); Sidler, Thomas, 6331 Hünenberg (CH)
(74) Representative: Patentanwälte Ruff, Wilhelm, Beier, Dauster & Partner mbB

(56) References cited:
- EP-A1- 3 196 653
- EP-A1- 3 196 654
- EP-A1- 3 432 004
- EP-A1- 3 912 726

## Description

### TECHNICAL FIELD

The invention relates to a laboratory sample container carrier handling apparatus, to a laboratory automation system comprising such a laboratory sample container carrier handling apparatus, and to a use of such a laboratory sample container carrier handling apparatus for handling a laboratory sample container carrier in, in particular such, a laboratory automation system.

EP 3 196 654 A1 discloses a method and a device for transferring sample tubes between a laboratory automation system and a sample archiving system, wherein for transferring a sample tube from the laboratory automation system to the sample archiving system, a sample tube carrier carrying at least one sample tube is conveyed to a first take-over module via a first conveyor line, at the first take-over module the at least one sample tube is removed from the sample tube carrier, and the empty sample tube carrier is conveyed away from the first take-over module via a second conveyor line, and for transferring a sample tube from the sample archiving system to the laboratory automation system, an empty sample tube carrier is conveyed to a second take-over module via a third conveyor line, at the second take-over module at least one sample tube is inserted into the sample tube carrier, and the sample tube carrier carrying the at least one sample tube is conveyed away from the second take-over module via a fourth conveyor line.

### SUMMARY OF THE INVENTION

It is an object of the invention to provide for a laboratory sample container carrier handling apparatus comprising improved properties, in particular enabling a reduction or prevention of problems. It is a further object of the invention to provide for a laboratory automation system comprising such a laboratory sample container carrier handling apparatus, and to provide for a use of such a laboratory sample container carrier handling apparatus for handling a laboratory sample container carrier in, in particular such, a laboratory automation system.

This object is solved by a laboratory sample container carrier handling apparatus, a laboratory automation system, and a use with the features of the respective independent claims. Preferred embodiments are defined in the dependent claims.

The invention relates to a laboratory sample container carrier handling apparatus. In particular the laboratory sample container carrier handling apparatus may be adapted to be coupled to a laboratory sample distribution system, in particular allowing different or variable, respectively, entry positions of a laboratory sample container carrier carrying a, in particular open, laboratory sample container containing a laboratory sample. The laboratory sample container carrier handling apparatus comprises a revolving device and a, in particular lateral, guiding surface or wall, respectively. The guiding surface comprise an open ring shape, in particular only, partially surrounding the revolving device circumferentially or laterally or outside, respectively. In particular the guiding surface may be adapted to guide the laboratory sample container carrier. The revolving device is adapted to push or move, respectively, the laboratory sample container carrier, in particular while, supplied to the revolving device from an entry position, in particular of different allowed entry positions, to an exit position, in particular partially, along or in contact with, respectively, the guiding surface in a circumferential direction. The guiding surface comprises an entry segment. The entry segment comprises, in particular only, a non-convex shape. A distance, in particular a value of the distance, of the entry segment from a center of the revolving device is greater at a start, in particular point, of the entry segment than at an end, in particular point, of the entry segment in the circumferential direction.

This enables a movement of the laboratory sample container carrier, in particular from different allowed entry positions, in contact with the guiding surface under a small or even no angle or, in particular essentially, tangential or flat, respectively, in particular in contrast to an entry segment comprising a convex shape and/or a constant distance. Thus, this enables a smooth or gentle, respectively, entry of the laboratory sample container carrier or with a small or even no impact, respectively. Thus, this enables a reduction or prevention of a risk of, in particular inadvertent, spillage of the laboratory sample out of the, in particular open, laboratory sample container. Thus, this enables a reduction or prevention of a risk of, in particular inadvertent, cross-contamination.

In particular the laboratory sample container carrier handling apparatus may be denoted as carousel.

The laboratory sample container may be open at its top. Additionally or alternatively the term "uncapped" may be used synonymously for the term "open". Additionally or alternatively the laboratory sample container may be a tube.

The laboratory sample may be a, in particular body, liquid or fluid, respectively, in particular a blood sample.

The revolving device may be motor-driven. Additionally or alternatively the term "star rotator" or "star wheel" may be used synonymously for the term "revolving device". Additionally or alternatively the revolving device may comprise a pushing element enclosing a rotating pushing area with the guiding surface. The pushing area may be adapted to push the laboratory sample container carrier supplied to the revolving device from the entry position to the exit position. In particular, the pushing area may increase, in particular continuously, to finally form-fit with a footprint of the laboratory sample container carrier. In particular to form-fit may mean to fit with a tolerance of less than 5 mm (Millimeter), in particular 1 mm, in particular less than 1 mm. Additionally or alternatively the revolving device may comprise a number (e.g. between 5 and 20) of pushing cavities being adapted to receive the laboratory sample container carrier to be rotated and to push the received laboratory sample container carrier. Thus, each laboratory sample container carrier may have its own cavity. In particular a respective pushing cavity may comprise two side walls, wherein the side walls may rotate around the center or an axis of rotation, respectively, of the revolving device, wherein a side wall may push the laboratory sample container carrier being in contact with the side wall. In particular the side walls may contact each other along the axis of rotation of the revolving device. This may be regarded with respect to actually visible side walls, or also with respect to lines that may be used in order to define dimensions of the cavities.

The guiding surface or its open ring shape, respectively, may surround the revolving device in a radial direction, in particular non-parallel, in particular orthogonal, to the circumferential direction. Additionally or alternatively the guiding surface may be continuous in the circumferential direction. Additionally or alternatively the term "guiding arch" may be used synonymously for the term "guiding surface".

The term/s "has/have" may be used synonymously for the term/s "comprise/s".

The term "form" may be used synonymously for the term "shape".

The term "encompass" may be used synonymously for the term "surround".

The term "configured" may be used synonymously for the term "adapted".

The term "start" may be used synonymously for the term "entry".

The contact may be a direct and/or a physical contact. Additionally or alternatively the term "touch" may be used synonymously for the term "contact".

The entry position may be a position at which the laboratory sample container carrier may be received by the laboratory sample container carrier handling apparatus, in particular the revolving device. Additionally or alternatively the exit position may be a position at which the laboratory sample container carrier may be transferred by the laboratory sample container carrier handling apparatus, in particular the revolving device.

The revolving device and/or the guiding surface may be adapted such that, in particular the, one laboratory sample container carrier may be at the entry position or enter the revolving device and/or the guiding surface, respectively, and another one laboratory sample container carrier may be at the exit position or exit the revolving device and/or the guiding surface, respectively, at the same time or simultaneously, respectively.

The entry segment surrounds the revolving device in an angle range between 40° and 70° in the circumferential direction around the center of the revolving device. This/these value/s enable/s the movement of the laboratory sample container carrier, in particular from different allowed entry positions, in contact with the guiding surface under a very small or even no angle. Thus, this enables a very smooth entry of the laboratory sample container carrier or with a very small or even no impact, respectively. In particular the range may comprise its limit values.

According to an embodiment of the invention, the laboratory sample container carrier handling apparatus is adapted to be coupled to a, in particular bottom, transport plane of a, in particular the, laboratory sample distribution system, in particular being adapted to support the laboratory sample container carrier. The laboratory sample container carrier handling apparatus comprises a, in particular bottom, driving surface, in particular being adapted to support the laboratory sample container carrier. The revolving device is adapted to push the laboratory sample container carrier on top of or in contact with, respectively, the driving surface, in particular and on top of the transport plane at the entry position and/or at the exit position. In particular the revolving device and/or the driving surface may be adapted such that the transport plane partially may extend under or below, respectively, the revolving device. In other words: the revolving device partially may rotate over the transport plane. Additionally or alternatively the driving surface may be adapted such that the transport plane may be adjacent to the driving surface. Additionally or alternatively the driving surface may start at the entry position and/or end at the exit position. Additionally or alternatively the entry position may be a position at which the laboratory sample container carrier may be received from the transport plane. Additionally or alternatively the exit position may be a position at which the laboratory sample container carrier may be transferred to the transport plane. Additionally or alternatively the driving surface may be stationary, in particular arranged and/or to the transport plane.

According to an embodiment of the invention, the guiding surface comprises an at least middle segment. The at least middle segment is, in particular directly, adjacent to the entry segment in the circumferential direction and comprises a circular shape. In particular a distance, in particular a value of the distance, of the at least middle segment from the center of the revolving device is constant in the circumferential direction. Additionally or alternatively the distance of the entry segment from the center of the revolving device is equal at the end of the entry segment to the distance of the at least middle segment from the center of the revolving device at least at the entry segment. This enables a smooth transition of the laboratory sample container carrier from the entry segment to the at least middle segment. In particular the entry segment and the at least middle segment may smoothly transition into each other. Additionally or alternatively the guiding surface or the at least middle segment may comprise an exit segment. The exit segment may be, in particular directly, adjacent to the middle segment in the circumferential direction.

According to an embodiment of the invention, the guiding surface comprises at least a first portion, in particular directly, adjacent to the at least middle segment. A radius, in particular a value of the radius, of the first portion is greater than a radius, in particular a value of the radius, of the at least middle segment at least at the entry segment. This enables the movement of the laboratory sample container carrier, in particular from different allowed entry positions, in contact with the guiding surface under a very small or even no angle. Thus, this enables a very smooth entry of the laboratory sample container carrier or with a very small or even no impact, respectively. In particular the term "part" may be used synonymously for the term "portion".

According to an embodiment of the invention, the guiding surface comprises a, in particular the, first portion and a second portion, in particular directly, adjacent to the first portion against the circumferential direction. A, in particular the, radius, in particular a value of the radius, of the first portion, in particular the radius of the at least middle segment at least at the entry segment, is greater than a radius of the second portion. This enables the movement of the laboratory sample container carrier, in particular from different allowed entry positions, in contact with the guiding surface under a very small or even no angle. Thus, this enables a very smooth entry of the laboratory sample container carrier or with a very small or even no impact, respectively. In particular the first portion and the second portion may smoothly transition into each other.

According to an embodiment of the invention, the guiding surface comprises a third portion, in particular directly, adjacent to the second portion against the circumferential direction. The radius of the second portion is greater than a radius, in particular a value of the radius, of the third portion. In particular the second portion and the third portion may smoothly transition into each other.

The radius may be adapted such that it becomes greater or increases, respectively, in particular continuously, along the entry segment in the circumferential direction.

According to an embodiment of the invention, the radius of the first portion is in a range between 150 mm and 190 mm and/or between 7,5 times and 9,5 times the radius of a, in particular the, pushing cavity or compartment, respectively, of the revolving device. The pushing cavity is adapted to receive the laboratory sample container carrier to be rotated and to push the received laboratory sample container carrier. Additionally or alternatively the radius of the second portion is in a range between 40 mm and 60 mm and/or between 2 times and 3 times the radius of the pushing cavity. Additionally or alternatively the radius of the third portion is in a range between 40 mm and 50 mm and/or between 2 times and 2,5 times the radius of the pushing cavity. Additionally or alternatively the radius of the at least middle segment at least at the entry segment is in a range between 50 mm and 70 mm and/or between 2,5 times and 3,5 times the radius of the pushing cavity. This/these value/s enable/s the movement of the laboratory sample container carrier, in particular from different allowed entry positions, in contact with the guiding surface under a very small or even no angle. Thus, this enables a very smooth entry of the laboratory sample container carrier or with a very small or even no impact, respectively. In particular the range may comprise its limit values. Additionally or alternatively the pushing cavity may comprise a shape form-fitting or corresponding, in particular partially, respectively, to a shape or a cross-section or an outer circumference, respectively, of the laboratory sample container carrier.

According to an embodiment of the invention, the guiding surface surrounds the revolving device in an angle range between 205° (degree) and 290° in the circumferential direction around the center of the revolving device. Additionally or alternatively the at least middle segment surrounds the revolving device in an angle range between 165° and 220° in the circumferential direction around the center of the revolving device. This/these value/s enable/s the movement of the laboratory sample container carrier, in particular from different allowed entry positions, in contact with the guiding surface under a very small or even no angle. Thus, this enables a very smooth entry of the laboratory sample container carrier or with a very small or even no impact, respectively. In particular the range may comprise its limit values.

According to an embodiment of the invention, the guiding surface, the entry segment and/or the at least middle segment are/is, in particular only, continuously in the circumferential direction and/or comprise/s, in particular only, a concave shape. Additionally or alternatively the entry segment comprises a shape between an ellipse and a rounded rectangle. In particular the entry segment does not have to or may not comprise a circular shape.

The invention relates further to a laboratory automation system. The laboratory automation system comprises a, in particular the, laboratory sample distribution system, in particular allowing different entry positions of a laboratory sample container carrier carrying a, in particular open, laboratory sample container containing a laboratory sample. The laboratory automation system comprises the laboratory sample container carrier handling apparatus as described above. The laboratory sample container carrier handling apparatus is coupled to the laboratory sample distribution system. In particular the laboratory automation system comprises the laboratory sample container carrier. This enables a smooth handling of the laboratory sample container carrier. In particular the laboratory sample container carrier may comprise a round, in particular circular, shape or cross-section, respectively, in particular where in contact with the revolving device and/or the guiding surface and/or in top view. Additionally or alternatively the laboratory sample container carrier may be adapted to carry, in particular only, one or more laboratory sample containers. Additionally or alternatively the laboratory sample container carrier may be adapted as disclosed in EP 2 908 139 A2 or EP 3 456 415 A1 or similar to those laboratory sample container carriers. Additionally or alternatively the laboratory sample distribution system may be adapted as disclosed in EP 2 773 968 B1. Reference is insofar made to the relevant technical literature.

According to an embodiment of the invention, the laboratory automation system comprises the laboratory sample container carrier handling apparatus as described above with respect to coupling to the transport plane. The laboratory sample distribution system comprises the transport plane, in particular being adapted to support the laboratory sample container carrier. The laboratory sample container carrier handling apparatus is coupled to the transport plane. In particular the transport plane may be adjacent to the driving surface. Additionally or alternatively the transport plane and the driving surface may smoothly transition into each other. Additionally or alternatively the transport plane and the driving surface may be identical to each other. Additionally or alternatively the transport plane may be adapted as disclosed in EP 2 773 968 B1. Reference is insofar made to the relevant technical literature.

According to an embodiment of the invention, the laboratory sample distribution system comprises drive means. The drive means are adapted to move the laboratory sample container carrier on top of or in contact with, respectively, the transport plane. The transport plane is, in particular directly, adjacent to the driving surface. The drive means are adapted to supply the laboratory sample container carrier to the revolving device and/or to receive the laboratory sample container carrier from the revolving device. This enables an efficient exchange of the laboratory sample container carrier between the transport plane and the revolving device. In particular the drive means may be adapted as disclosed in EP 2 773 968 B1. Reference is insofar made to the relevant technical literature.

According to an embodiment of the invention, the laboratory sample container carrier comprises at least one magnetically active device, in particular at least one permanent magnet. The drive means comprise a number of electro-magnetic actuators being stationary arranged in rows and columns below the transport plane. The electro-magnetic actuators are adapted to apply a magnetic force to the laboratory sample container carrier. This enables a smooth and flexible driving of the laboratory sample container carrier.

According to an embodiment of the invention, the laboratory automation system comprises at least one pre-analytical, analytical and/or post-analytical laboratory apparatus. The laboratory apparatus is adapted to interact with the laboratory sample container carrier, a, in particular open, laboratory sample container carried by the laboratory sample container carrier, and/or a laboratory sample contained by the laboratory sample container, in particular, while, supplied to the revolving device. In particular the laboratory apparatus may be a supervising device, in particular a camera, a recapping device, and/or an identification device, in particular a barcode reader. Additionally or alternatively the laboratory apparatus may be at the at least middle segment, in particular in the circumferential direction.

The invention relates further to a use of the laboratory sample container handling apparatus as described above for handling, in particular revolving, the laboratory sample container carrier, in particular carrying the, in particular open, laboratory sample container containing the laboratory sample, in a, in particular the, laboratory automation system, in particular as described above.

### BRIEF DESCRIPTION OF THE DRAWINGS

In the following, embodiments of the invention will be described in detail with reference to the drawings. Throughout the drawings, the same elements will be denoted by the same reference numerals.
- Fig. 1: schematically depicts a top view of a laboratory automation system according to the invention,
- Fig. 2: schematically depicts a cross-sectional side view of a laboratory sample container carrier comprised by the laboratory automation system,
- Fig. 3: schematically depicts a perspective view of a laboratory sample container carrier handling apparatus according to the invention comprised by the laboratory automation system,
- Fig. 4: schematically depicts a perspective view of a guiding surface of the laboratory sample container carrier handling apparatus of Fig. 3,
- Fig. 5: schematically depicts a top view of the guiding surface of Fig. 4, and
- Fig. 6: schematically depicts another top view of the laboratory automation system.

### DETAILED DESCRIPTION OF EMBODIMENTS OF THE INVENTION

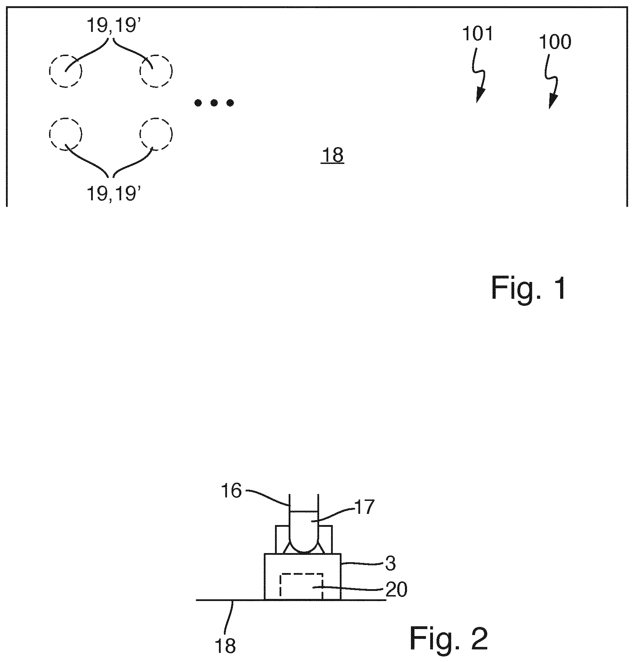

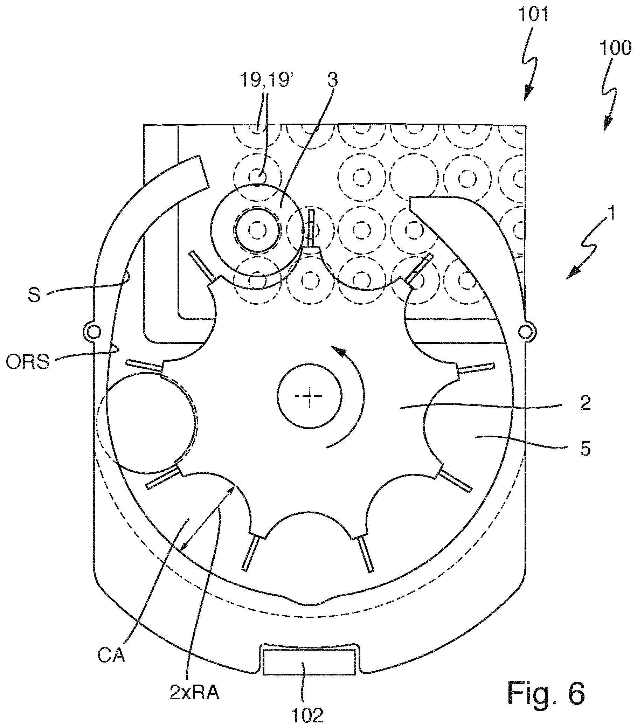

Fig. 1 schematically depicts a top view of a laboratory automation system 100 according to the invention. The laboratory automation system 100 comprises a plurality of laboratory sample container carriers 3, one of which is schematically depicted in Fig. 2 and 6.

Each laboratory sample container carrier 3 is adapted to carry, in particular carries, one laboratory sample container 16. The laboratory sample container 16 comprises a laboratory sample 17 to be analyzed.

The laboratory automation system 100 further comprises a laboratory sample distribution system 101, which is schematically depicted in Fig. 1 and 6.

The laboratory sample distribution system 101 comprises a, in particular flat, transport plane 18. The transport plane 18 is adapted to support, in particular supports, the laboratory sample container carriers 3. In other words: the laboratory sample container carriers 3 are placed on top of the transport plane 18.

The laboratory sample distribution system 100 further comprises drive means 19. The drive means 19 are adapted to move, in particular move, the laboratory sample container carrier 3 on top of the transport plane 18.

In detail the laboratory sample container carrier 3 comprises at least one magnetically active device 20, in particular at least one permanent magnet, in particular in a bottom portion of the laboratory sample container carrier 3, which is schematically depicted in Fig. 2. The drive means 19 comprise a number of electro-magnetic actuators 19' being stationary arranged in rows and columns below the transport plane 18. The electro-magnetic actuators 19' are adapted to apply, in particular apply, a magnetic force to the laboratory sample container carrier 3. Thus, the electro-magnetic actuators 19' are adapted to move, in particular move, the sample container carrier 3.

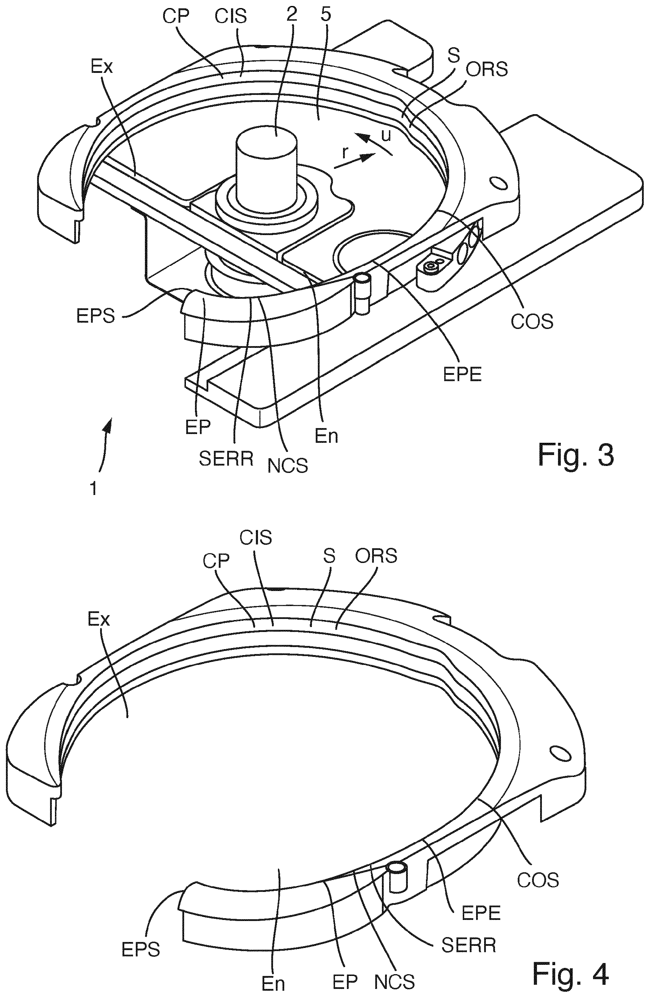

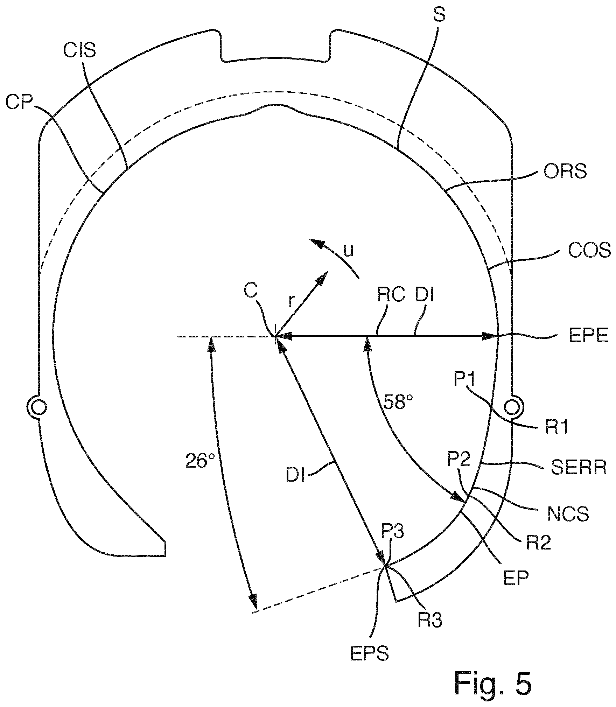

The laboratory sample distribution system 100 further comprises a laboratory sample container carrier handling apparatus 1 according to the invention, which is schematically depicted in Fig. 3 and 6. The laboratory sample container carrier handling apparatus 1 comprises a revolving device 2, wherein in Fig. 3 only a part of the revolving device 2 is depicted. The laboratory sample container carrier handling apparatus 1 further comprises a guiding surface S, which is depicted in Fig. 3 to 6. The guiding surface S comprises an open ring shape ORS partially surrounding the revolving device 2 circumferentially. The revolving device 2 is adapted to push, in particular pushes, the laboratory sample container carrier 3 supplied to the revolving device 2 from an entry position En to an exit position Ex along the guiding surface S in a circumferential direction u. The guiding surface S comprises an entry segment EP. The entry segment EP comprises a non-convex shape NCS. A distance DI of the entry segment EP from a center C of the revolving device 2 is greater at a start EPS of the entry segment EP than at an end EPE of the entry segment EP in the circumferential direction u.

In detail the laboratory sample container carrier handling apparatus 1 is adapted to be coupled, in particular is coupled, to the laboratory sample distribution system 101, in particular its transport plane 18.

The laboratory sample container carrier handling apparatus 1 comprises a driving surface 5. The revolving device 2 is adapted to push, in particular pushes, the laboratory sample container carrier 3 on top of the driving surface 5, in particular and on top of the transport plane 18 at the entry position En and/or at the exit position Ex.

The transport plane 18 is adjacent to the driving surface 5. The drive means 19 are adapted to supply, in particular supply, the laboratory sample container carrier 3 to the revolving device 2 and/or to receive, in particular receive, the laboratory sample container carrier 3 from the revolving device 2.

The guiding surface S comprises an at least middle segment CP. The at least middle segment CP is adjacent to the entry segment EP in the circumferential direction u and comprises a circular shape CIS.

In particular a distance DI of the at least middle segment CP from the center C of the revolving device 2 is constant in the circumferential direction u.

Additionally or alternatively the distance DI of the entry segment EP from the center C of the revolving device 2 is equal at the end EPE of the entry segment EP to the distance DI of the at least middle segment CP from the center C of the revolving device 2 at least at the entry segment EP.

The guiding surface S comprises at least a first portion P1.

The first portion P1 is adjacent to the at least middle segment CP. A radius R1 of the first portion P1 is greater than a radius RC of the at least middle segment CP at least at the entry segment EP.

The guiding surface S comprises a second portion P2 adjacent to the first portion P1 against the circumferential direction u. The radius R1 of the first portion P1, in particular the radius RC of the at least middle segment CP at least at the entry segment EP, is greater than a radius R2 of the second portion P2.

The guiding surface S comprises a third portion P3 adjacent to the second portion P2 against the circumferential direction u. The radius R2 of the second portion P2 is greater than a radius R3 of the third portion P3.

In detail the radius R1 of the first portion P1 is in a range between 150 mm and 190 mm, in particular 170 mm, and/or between 7,5 times and 9,5 times, in particular 8,5 times, the radius RA of a pushing cavity CA of the revolving device 2. The pushing cavity CA is adapted to receive, in particular receives, the laboratory sample container carrier 3 to be rotated and to push, in particular pushes, the received laboratory sample container carrier 3. In particular the revolving device 2 comprises 8 pushing cavities CA. Additionally or alternatively the pushing cavity comprises a semi-circular shape.

Additionally or alternatively the radius R2 of the second portion P2 is in a range between 40 mm and 60 mm, in particular 50 mm, and/or between 2 times and 3 times, in particular 2,5 times, the radius RA of the pushing cavity CA.

Additionally or alternatively the radius R3 of the third portion P3 is in a range between 40 mm and 50 mm, in particular 45 mm, and/or between 2 times and 2,5 times, in particular 2,25 times, the radius RA of the pushing cavity CA.

Additionally or alternatively the radius RC of the at least middle segment CP at least at the entry segment EP is in a range between 50 mm and 70 mm, in particular 60 mm, and/or between 2,5 times and 3,5 times, in particular 3 times, the radius RA of the pushing cavity CA.

The guiding surface S surrounds the revolving device 2 in an angle range between 205° and 290°, in particular of 247,5°, in the circumferential direction u around the center C of the revolving device.

Additionally the entry segment EP surrounds the revolving device 2 in an angle range between 40° and 70°, in particular of 55°, in the circumferential direction u around the center C of the revolving device 2.

Additionally or alternatively the at least middle segment CP surrounds the revolving device 2 in an angle range between 165° and 220°, in particular of 192,5°, in the circumferential direction u around the center C of the revolving device 2.

The guiding surface S, the entry segment EP and/or the at least middle segment CP are/is, in particular only, continuously in the circumferential direction u and/or comprise/s, in particular only, a concave shape COS.

Additionally or alternatively the entry segment EP comprises a shape SERR between an ellipse and a rounded rectangle.

The laboratory automation system 100 further comprises at least one pre-analytical, analytical and/or post-analytical laboratory apparatus 102, which is schematically depicted in Fig. 6. The laboratory apparatus 102 is adapted to interact, in particular interacts, with the laboratory sample container carrier 3, the laboratory sample container 16 carried by the laboratory sample container carrier 3, and/or the laboratory sample 17 contained by the laboratory sample container 16 supplied to the revolving device 2.

The laboratory sample container handling apparatus 1 is used for handling, in particular revolving, the laboratory sample container carrier 3 in the laboratory automation system 100.

## Claims

1. Laboratory sample container carrier handling apparatus (1) comprising:
- a revolving device (2), and
- a guiding surface (S),
- wherein the guiding surface (S) comprises an open ring shape (ORS) partially surrounding the revolving device (2) circumferentially,
- wherein the revolving device (2) is adapted to push a laboratory sample container carrier (3) supplied to the revolving device (2) from an entry position (En) to an exit position (Ex) along the guiding surface (S) in a circumferential direction (u), and
- wherein the guiding surface (S) comprises an entry segment (EP), wherein the entry segment (EP) comprises a non-convex shape (NCS), and wherein a distance (DI) of the entry segment (EP) from a center (C) of the revolving device (2) is greater at a start (EPS) of the entry segment (EP) than at an end (EPE) of the entry segment (EP) in the circumferential direction (u),
- **characterised in that** the entry segment (EP) surrounds the revolving device (2) in an angle range between 40° and 70° in the circumferential direction (u) around the center (C) of the revolving device (2).

2. Laboratory sample container carrier handling apparatus (1) according to the preceding claim,
- wherein the laboratory sample container carrier handling apparatus (1) is adapted to be coupled to a transport plane (18) of a laboratory sample distribution system (101),
- wherein the laboratory sample container carrier handling apparatus (1) comprises a driving surface (5), and
- wherein the revolving device (2) is adapted to push the laboratory sample container carrier (3) on top of the driving surface (5), in particular and on top of the transport plane (18) at the entry position (En) and/or at the exit position (Ex).

3. Laboratory sample container carrier handling apparatus (1) according to any one of the preceding claims,
- wherein the guiding surface (S) comprises an at least middle segment (CP), wherein the at least middle segment (CP) is adjacent to the entry segment (EP) in the circumferential direction (u) and comprises a circular shape (CIS),
- in particular wherein a distance (DI) of the at least middle segment (CP) from the center (C) of the revolving device (2) is constant in the circumferential direction (u), and/or
- in particular wherein the distance (DI) of the entry segment (EP) from the center (C) of the revolving device (2) is equal at the end (EPE) of the entry segment (EP) to the distance (DI) of the at least middle segment (CP) from the center (C) of the revolving device (2) at least at the entry segment (EP).

4. Laboratory sample container carrier handling apparatus (1) according to the preceding claim,
- wherein the guiding surface (S) comprises at least a first portion (P1) adjacent to the at least middle segment (CP), wherein a radius (R1) of the first portion (P1) is greater than a radius (RC) of the at least middle segment (CP) at least at the entry segment (EP).

5. Laboratory sample container carrier handling apparatus (1) according to any one of the preceding claims,
- wherein the guiding surface (S) comprises a first portion (P1) and a second portion (P2) adjacent to the first portion (P1) against the circumferential direction (u),
- wherein a radius (R1) of the first portion (P1) is greater than a radius (R2) of the second portion (P2).

6. Laboratory sample container carrier handling apparatus (1) according to the preceding claim,
- wherein the guiding surface (S) comprises a third portion (P3) adjacent to the second portion (P2) against the circumferential direction (u),
- wherein the radius (R2) of the second portion (P2) is greater than a radius (R3) of the third portion (P3).

7. Laboratory sample container carrier handling apparatus (1) according to any one of claims 4 to 6,
- wherein the radius (R1) of the first portion (P1) is in a range between 150 mm and 190 mm and/or between 7,5 times and 9,5 times the radius (RA) of a pushing cavity (CA) of the revolving device (2), wherein the pushing cavity (CA) is adapted to receive the laboratory sample container carrier (3) to be rotated and to push the received laboratory sample container carrier (3), and/or
- wherein the radius (R2) of the second portion (P2) is in a range between 40 mm and 60 mm and/or between 2 times and 3 times the radius (RA) of the pushing cavity (CA), and/or
- wherein the radius (R3) of the third portion (P3) is in a range between 40 mm and 50 mm and/or between 2 times and 2,5 times the radius (RA) of the pushing cavity (CA), and/or
- wherein the radius (RC) of the at least middle segment (CP) at least at the entry segment (EP) is in a range between 50 mm and 70 mm and/or between 2,5 times and 3,5 times the radius (RA) of the pushing cavity (CA).

8. Laboratory sample container carrier handling apparatus (1) according to any one of the preceding claims,
- wherein the guiding surface (S) surrounds the revolving device (2) in an angle range between 205° and 290° in the circumferential direction (u) around the center (C) of the revolving device (2).

9. Laboratory sample container carrier handling apparatus (1) according to any one of the preceding claims,
- wherein the guiding surface (S) and/or the entry segment (EP) are/is continuously in the circumferential direction (u) and/or comprise/s a concave shape (COS).

10. Laboratory automation system (100), wherein the laboratory automation system (100) comprises:
- a laboratory sample distribution system (101), and
- the laboratory sample container carrier handling apparatus (1) according to any one of the preceding claims, wherein the laboratory sample container carrier handling apparatus (1) is coupled to the laboratory sample distribution system (101).

11. Laboratory automation system (100) according to the preceding claim, wherein the laboratory automation system (100) comprises:
- the laboratory sample container carrier handling apparatus (1) according to claim 2, and
- wherein the laboratory sample distribution system (101) comprises the transport plane (18),
- wherein the laboratory sample container carrier handling apparatus (1) is coupled to the transport plane (18).

12. Laboratory automation system (100) according to the preceding claim,
- wherein the laboratory sample distribution system (101) comprises drive means (19), wherein the drive means (19) are adapted to move the laboratory sample container carrier (3) on top of the transport plane (18),
- in particular wherein the transport plane (18) is adjacent to the driving surface (5), wherein the drive means (19) are adapted to supply the laboratory sample container carrier (3) to the revolving device (2) and/or to receive the laboratory sample container carrier (3) from the revolving device (2).

13. Laboratory automation system (100) according to the preceding claim,
- wherein the laboratory sample container carrier (3) comprises at least one magnetically active device (20), in particular at least one permanent magnet, and
- wherein the drive means (19) comprise a number of electro-magnetic actuators (19') being stationary arranged in rows and columns below the transport plane (18), wherein the electro-magnetic actuators (19') are adapted to apply a magnetic force to the laboratory sample container carrier (3).

14. Laboratory automation system (100) according to any one of claims 10 to 14, wherein the laboratory automation system (100) comprises:
- at least one pre-analytical, analytical and/or post-analytical laboratory apparatus (102), wherein the laboratory apparatus (102) is adapted to interact with the laboratory sample container carrier (3), a laboratory sample container (16) carried by the laboratory sample container carrier (3), and/or a laboratory sample (17) contained by the laboratory sample container (16) supplied to the revolving device (2).

15. Use of the laboratory sample container handling apparatus (1) according to any one of claims 1 to 9 for handling the laboratory sample container carrier (3) in a laboratory automation system (100).

## Patentansprüche

1. Handhabungsvorrichtung (1) für Laborprobenbehälterträger, umfassend:
- eine Drehvorrichtung (2) und
- eine Führungsfläche (S),
- wobei die Führungsfläche (S) eine offene Ringform (ORS) umfasst, die die Drehvorrichtung (2) im Umfang teilweise umschließt,
- wobei die Drehvorrichtung (2) dafür ausgelegt ist, einen Laborprobenbehälterträger (3), der der Drehvorrichtung (2) zugeführt wurde, entlang der Führungsfläche (S) in einer Umfangsrichtung (u) aus einer Eintrittsposition (En) in eine Austrittsposition (Ex) zu schieben und
- wobei die Führungsfläche (S) ein Eintrittssegment (EP) umfasst, wobei das Eintrittssegment (EP) eine nicht konvexe Form (NCS) umfasst und wobei ein Abstand (DI) des Eintrittssegments (EP) von einer Mitte (C) der Drehvorrichtung (2) in der Umfangsrichtung (u) an einem Beginn (EPS) des Eintrittssegments (EP) größer ist als an einem Ende (EPE) des Eintrittssegments (EP),
- **dadurch gekennzeichnet, dass** das Eintrittssegment (EP) die Drehvorrichtung (2) in einem Winkelbereich zwischen 40° und 70° in der Umfangsrichtung (u) um die Mitte (C) der Drehvorrichtung (2) umschließt.

2. Handhabungsvorrichtung (1) für Laborprobenbehälterträger nach dem vorstehenden Anspruch,
- wobei die Handhabungsvorrichtung (1) für Laborprobenbehälterträger dafür ausgelegt ist, an eine Transportebene (18) eines Laborprobenverteilungssystems (101) gekoppelt zu werden,
- wobei die Handhabungsvorrichtung (1) für Laborprobenbehälterträger eine Fahrfläche (5) umfasst und
- wobei die Drehvorrichtung (2) dafür ausgelegt ist, den Laborprobenbehälterträger (3) auf der Fahrfläche (5) und insbesondere auf der Transportebene (18) an der Eintrittsposition (En) und/oder an der Austrittsposition (Ex) zu schieben.

3. Handhabungsvorrichtung (1) für Laborprobenbehälterträger nach einem der vorstehenden Ansprüche,
- wobei die Führungsfläche (S) mindestens ein Mittelsegment (CP) umfasst, wobei das mindestens eine Mittelsegment (CP) in der Umfangsrichtung (u) an das Eintrittssegment (EP) angrenzt und eine Kreisform (CIS) umfasst,
- insbesondere wobei ein Abstand (DI) des mindestens einen Mittelsegments (CP) von der Mitte (C) der Drehvorrichtung (2) in der Umfangsrichtung (u) konstant ist und/oder
- insbesondere wobei der Abstand (DI) des Eintrittssegments (EP) von der Mitte (C) der Drehvorrichtung (2) am Ende (EPE) des Eintrittssegments (EP) gleich dem Abstand (DI) des mindestens einen Mittelsegments (CP) von der Mitte (C) der Drehvorrichtung (2) mindestens am Eintrittssegment (EP) ist.

4. Handhabungsvorrichtung (1) für Laborprobenbehälterträger nach dem vorstehenden Anspruch,
- wobei die Führungsfläche (S) mindestens einen ersten Abschnitt (P1) umfasst, der an das mindestens eine Mittelsegment (CP) angrenzt, wobei ein Radius (R1) des ersten Abschnitts (P1) größer ist als ein Radius (RC) des mindestens einen Mittelsegments (CP) mindestens an dem Eintrittssegment (EP).

5. Handhabungsvorrichtung (1) für Laborprobenbehälterträger nach einem der vorstehenden Ansprüche,
- wobei die Führungsfläche (S) einen ersten Abschnitt (P1) und einen zweiten Abschnitt (P2), der gegen die Umfangsrichtung (u) an den ersten Abschnitt (P1) angrenzt, umfasst,
- wobei ein Radius (R1) des ersten Abschnitts (P1) größer ist als ein Radius (R2) des zweiten Abschnitts (P2).

6. Handhabungsvorrichtung (1) für Laborprobenbehälterträger nach dem vorstehenden Anspruch,
- wobei die Führungsfläche (S) einen dritten Abschnitt (P3) umfasst, der gegen die Umfangsrichtung (u) an den zweiten Abschnitt (P2) angrenzt,
- wobei der Radius (R2) des zweiten Abschnitts (P2) größer ist als ein Radius (R3) des dritten Abschnitts (P3).

7. Handhabungsvorrichtung (1) für Laborprobenbehälterträger nach einem der Ansprüche 4 bis 6,
- wobei der Radius (R1) des ersten Abschnitts (P1) in einem Bereich zwischen 150 mm und 190 mm und/oder zwischen dem 7,5-Fachen und 9,5-Fachen des Radius (RA) einer Schiebevertiefung (CA) der Drehvorrichtung (2) liegt, wobei die Schiebevertiefung (CA) dafür ausgelegt ist, den zu rotierenden Laborprobenbehälterträger (3) aufzunehmen und den aufgenommenen Laborprobenbehälterträger (3) zu schieben, und/oder
- wobei der Radius (R2) des zweiten Abschnitts (P2) in einem Bereich zwischen 40 mm und 60 mm und/oder zwischen dem 2-Fachen und 3-Fachen des Radius (RA) der Schiebevertiefung (CA) liegt und/oder
- wobei der Radius (R3) des dritten Abschnitts (P3) in einem Bereich zwischen 40 mm und 50 mm und/oder zwischen dem 2-Fachen und 2,5-Fachen des Radius (RA) der Schiebevertiefung (CA) liegt und/oder
- wobei der Radius (RC) des mindestens einen Mittelsegments (CP) mindestens an dem Eintrittssegment (EP) in einem Bereich zwischen 50 mm und 70 mm und/oder zwischen dem 2,5-Fachen und 3,5-Fachen des Radius (RA) der Schiebevertiefung (CA) liegt.

8. Handhabungsvorrichtung (1) für Laborprobenbehälterträger nach einem der vorstehenden Ansprüche,
- wobei die Führungsfläche (S) die Drehvorrichtung (2) in einem Winkelbereich zwischen 205° und 290° in der Umfangsrichtung (u) um die Mitte (C) der Drehvorrichtung (2) umschließt.

9. Handhabungsvorrichtung (1) für Laborprobenbehälterträger nach einem der vorstehenden Ansprüche,
- wobei die Führungsfläche (S) und/oder das Eintrittssegment (EP) in der Umfangsrichtung (u) durchgehend sind/ist und/oder eine konkave Form (COS) umfassen/umfasst.

10. Laborautomatisierungssystem (100), wobei das Laborautomatisierungssystem (100) Folgendes umfasst:
- ein Laborprobenverteilungssystem (101) und
- die Handhabungsvorrichtung (1) für Laborprobenbehälterträger nach einem der vorstehenden Ansprüche, wobei die Handhabungsvorrichtung (1) für Laborprobenbehälterträger an das Laborprobenverteilungssystem (101) gekoppelt ist.

11. Laborautomatisierungssystem (100) nach dem vorstehenden Anspruch, wobei das Laborautomatisierungssystem (100) Folgendes umfasst:
- die Handhabungsvorrichtung (1) für Laborprobenbehälterträger nach Anspruch 2 und
- wobei das Laborprobenverteilungssystem (101) die Transportebene (18) umfasst,
- wobei die Handhabungsvorrichtung (1) für Laborprobenbehälterträger an die Transportebene (18) gekoppelt ist.

12. Laborautomatisierungssystem (100) nach dem vorstehenden Anspruch,
- wobei das Laborprobenverteilungssystem (101) Antriebseinrichtungen (19) umfasst, wobei die Antriebseinrichtungen (19) dafür ausgelegt sind, den Laborprobenbehälterträger (3) auf der Transportebene (18) zu bewegen,
- insbesondere wobei die Transportebene (18) an die Fahrfläche (5) angrenzt, wobei die Antriebseinrichtungen (19) dafür ausgelegt sind, den Laborprobenbehälterträger (3) der Drehvorrichtung (2) zuzuführen und/oder den Laborprobenbehälterträger (3) aus der Drehvorrichtung (2) aufzunehmen.

13. Laborautomatisierungssystem (100) nach dem vorstehenden Anspruch,
- wobei der Laborprobenbehälterträger (3) mindestens eine magnetisch wirkende Vorrichtung (20), insbesondere mindestens einen Dauermagneten umfasst, und
- wobei die Antriebseinrichtungen (19) mehrere elektromagnetische Aktuatoren (19') umfassen, die stationär in Reihen und Spalten unter der Transportebene (18) angeordnet sind, wobei die elektromagnetischen Aktuatoren (19') dafür ausgelegt sind, eine Magnetkraft auf den Laborprobenbehälterträger (3) auszuüben.

14. Laborautomatisierungssystem (100) nach einem der Ansprüche 10 bis 14, wobei das Laborautomatisierungssystem (100) Folgendes umfasst:
- mindestens einen Voranalyse-, Analyse- und/oder Nachanalyselaborapparat (102), wobei der Laborapparat (102) dafür ausgelegt ist, mit dem Laborprobenbehälterträger (3), einem Laborprobenbehälter (16), der von dem Laborprobenbehälterträger (3) getragen wird, und/oder einer Laborprobe (17), die in dem Laborprobenbehälter (16) enthalten ist, der der Drehvorrichtung (2) zugeführt wurde, zu interagieren.

15. Verwendung der Handhabungsvorrichtung (1) für Laborprobenbehälterträger nach einem der Ansprüche 1 bis 9 zum Handhaben des Laborprobenbehälterträgers (3) in einem Laborautomatisierungssystem (100).

## Revendications

1. Appareil de manipulation de support de récipient d'échantillons de laboratoire (1) comprenant :
- un dispositif rotatif (2), et
- une surface de guidage (S),
- dans lequel la surface de guidage (S) comprend une forme d'anneau ouvert (ORS) entourant partiellement le dispositif rotatif (2) de manière circonférentielle,
- dans lequel le dispositif rotatif (2) est adapté pour pousser un support de récipient d'échantillons de laboratoire (3) fourni au dispositif rotatif (2) d'une position d'entrée (En) jusqu'à une position de sortie (Ex) le long de la surface de guidage (S) dans une direction circonférentielle (u), et
- dans lequel la surface de guidage (S) comprend un segment d'entrée (EP), dans lequel le segment d'entrée (EP) comprend une forme non convexe (NCS), et dans lequel une distance (DI) du segment d'entrée (EP) à partir d'un centre (C) du dispositif rotatif (2) est plus grande au début (EPS) du segment d'entrée (EP) qu'à la fin (EPE) du segment d'entrée (EP) dans la direction circonférentielle (u),
- **caractérisé en ce que** le segment d'entrée (EP) entoure le dispositif rotatif (2) dans une plage d'angle comprise entre 40° et 70° dans la direction circonférentielle (u) autour du centre (C) du dispositif rotatif (2).

2. Appareil de manipulation de support de récipient d'échantillons de laboratoire (1) selon la revendication précédente,
- dans lequel l'appareil de manipulation de support de récipient d'échantillons de laboratoire (1) est adapté pour être accouplé à un plan de transport (18) d'un système de distribution d'échantillons de laboratoire (101),
- dans lequel l'appareil de manipulation de support de récipient d'échantillons de laboratoire (1) comprend une surface d'entraînement (5), et
- dans lequel le dispositif rotatif (2) est adapté pour pousser le support de récipient d'échantillons de laboratoire (3) au-dessus de la surface d'entraînement (5), en particulier et au-dessus du plan de transport (18) au niveau de la position d'entrée (En) et/ou au niveau de la position de sortie (Ex).

3. Appareil de manipulation de support de récipient d'échantillons de laboratoire (1) selon l'une quelconque des revendications précédentes,
- dans lequel la surface de guidage (S) comprend un segment au moins intermédiaire (CP), dans lequel le segment au moins intermédiaire (CP) est adjacent au segment d'entrée (EP) dans la direction circonférentielle (u) et comprend une forme circulaire (CIS),
- en particulier dans lequel une distance (DI) du segment au moins intermédiaire (CP) à partir du centre (C) du dispositif rotatif (2) est constante dans la direction circonférentielle (u), et/ou
- en particulier dans lequel la distance (DI) du segment d'entrée (EP) à partir du centre (C) du dispositif rotatif (2) est égale à la fin (EPE) du segment d'entrée (EP) à la distance (DI) du segment au moins intermédiaire (CP) à partir du centre (C) du dispositif rotatif (2) au moins au niveau du segment d'entrée (EP).

4. Appareil de manipulation de support de récipient d'échantillons de laboratoire (1) selon la revendication précédente,
- dans lequel la surface de guidage (S) comprend au moins une première partie (P1) adjacente au segment au moins intermédiaire (CP), dans lequel un rayon (R1) de la première partie (P1) est supérieur à un rayon (RC) du segment au moins intermédiaire (CP) au moins au niveau du segment d'entrée (EP).

5. Appareil de manipulation de support de récipient d'échantillons de laboratoire (1) selon l'une quelconque des revendications précédentes,
- dans lequel la surface de guidage (S) comprend une première partie (P1) et une deuxième partie (P2) adjacente à la première partie (P1) par rapport à la direction circonférentielle (u),
- dans lequel un rayon (R1) de la première partie (P1) est supérieur à un rayon (R2) de la deuxième partie (P2).

6. Appareil de manipulation de support de récipient d'échantillons de laboratoire (1) selon la revendication précédente,
- dans lequel la surface de guidage (S) comprend une troisième partie (P3) adjacente à la deuxième partie (P2) par rapport à la direction circonférentielle (u),
- dans lequel le rayon (R2) de la deuxième partie (P2) est supérieur à un rayon (R3) de la troisième partie (P3).

7. Appareil de manipulation de support de récipient d'échantillons de laboratoire (1) selon l'une quelconque des revendications 4 à 6,
- dans lequel le rayon (R1) de la première partie (P1) est dans une plage comprise entre 150 mm et 190 mm et/ou entre 7,5 fois et 9,5 fois le rayon (RA) d'une cavité de poussée (CA) du dispositif rotatif (2), dans lequel la cavité de poussée (CA) est adaptée pour recevoir le support de récipient d'échantillons de laboratoire (3) à faire tourner et pour pousser le support de récipient d'échantillons de laboratoire (3) reçu, et/ou
- dans lequel le rayon (R2) de la deuxième partie (P2) est dans une plage comprise entre 40 mm et 60 mm et/ou entre 2 fois et 3 fois le rayon (RA) de la cavité de poussée (CA), et/ou
- dans lequel le rayon (R3) de la troisième partie (P3) est dans une plage comprise entre 40 mm et 50 mm et/ou entre 2 fois et 2,5 fois le rayon (RA) de la cavité de poussée (CA), et/ou
- dans lequel le rayon (RC) du segment au moins intermédiaire (CP) au moins au niveau du segment d'entrée (EP) est dans une plage comprise entre 50 mm et 70 mm et/ou entre 2,5 fois et 3,5 fois le rayon (RA) de la cavité de poussée (CA).

8. Appareil de manipulation de support de récipient d'échantillons de laboratoire (1) selon l'une quelconque des revendications précédentes,
- dans lequel la surface de guidage (S) entoure le dispositif rotatif (2) dans une plage d'angle comprise entre 205° et 290° dans la direction circonférentielle (u) autour du centre (C) du dispositif rotatif (2).

9. Appareil de manipulation de support de récipient d'échantillons de laboratoire (1) selon l'une quelconque des revendications précédentes,
- dans lequel la surface de guidage (S) et/ou le segment d'entrée (EP) est/sont en continu dans la direction circonférentielle (u) et/ou comprend/comprennent une forme concave (COS).

10. Système d'automatisation de laboratoire (100), dans lequel le système d'automatisation de laboratoire (100) comprend :
- un système de distribution d'échantillons de laboratoire (101), et
- l'appareil de manipulation de support de récipient d'échantillons de laboratoire (1) selon l'une quelconque des revendications précédentes, dans lequel l'appareil de manipulation de support de récipient d'échantillons de laboratoire (1) est accouplé au système de distribution d'échantillons de laboratoire (101).

11. Système d'automatisation de laboratoire (100) selon la revendication précédente, dans lequel le système d'automatisation de laboratoire (100) comprend :
- l'appareil de manipulation de support de récipient d'échantillons de laboratoire (1) selon la revendication 2, et
- dans lequel le système de distribution d'échantillons de laboratoire (101) comprend le plan de transport (18),
- dans lequel l'appareil de manipulation de support de récipient d'échantillons de laboratoire (1) est accouplé au plan de transport (18).

12. Système d'automatisation de laboratoire (100) selon la revendication précédente,
- dans lequel le système de distribution d'échantillons de laboratoire (101) comprend des moyens d'entraînement (19), dans lequel les moyens d'entraînement (19) sont adaptés pour déplacer le support de récipient d'échantillons de laboratoire (3) au-dessus du plan de transport (18),
- en particulier dans lequel le plan de transport (18) est adjacent à la surface d'entraînement (5), dans lequel les moyens d'entraînement (19) sont adaptés pour fournir le support de récipient d'échantillons de laboratoire (3) au dispositif rotatif (2) et/ou pour recevoir le support de récipient d'échantillons de laboratoire (3) en provenance du dispositif rotatif (2).

13. Système d'automatisation de laboratoire (100) selon la revendication précédente,
- dans lequel le support de récipient d'échantillons de laboratoire (3) comprend au moins un dispositif magnétiquement actif (20), en particulier au moins un aimant permanent, et
- dans lequel les moyens d'entraînement (19) comprennent un certain nombre d'actionneurs électromagnétiques (19') agencés de manière stationnaire en rangées et colonnes au-dessous du plan de transport (18), dans lequel les actionneurs électromagnétiques (19') sont adaptés pour appliquer une force magnétique au support de récipient d'échantillons de laboratoire (3).

14. Système d'automatisation de laboratoire (100) selon l'une quelconque des revendications 10 à 14, dans lequel le système d'automatisation de laboratoire (100) comprend :
- au moins un appareil de laboratoire (102) pré-analytique, analytique et/ou post-analytique, dans lequel l'appareil de laboratoire (102) est adapté pour interagir avec le support de récipient d'échantillons de laboratoire (3), un récipient d'échantillons de laboratoire (16) transporté par le support de récipient d'échantillons de laboratoire (3) et/ou un échantillon de laboratoire (17) contenu dans le récipient d'échantillons de laboratoire (16) fourni au dispositif rotatif (2).

15. Utilisation de l'appareil de manipulation de récipient d'échantillons de laboratoire (1) selon l'une quelconque des revendications 1 à 9 pour la manipulation du support de récipient d'échantillons de laboratoire (3) dans un système d'automatisation de laboratoire (100).
